# EUROPÄISCHE PATENTANMELDUNG

(11) **EP 3 578 413 A1**
(43) Veröffentlichungstag der Anmeldung: **11.12.2019**
(21) Anmeldenummer: 19173506.7
(22) Anmeldetag: 09.05.2019
(51) Int. Cl.: B60L 55/00

(54) **MOBILE ENTLADEVORRICHTUNG FÜR EINEN ENERGIESPEICHER EINES ELEKTROFAHRZEUGS**

(30) Priorität: 08.06.2018 DE 102018209107
(71) Anmelder: Audi AG, 85045 Ingolstadt (DE)
(72) Erfinder: Ruppert, Daniel, 85101 Lenting (DE)

(57) **Zusammenfassung**

Die Erfindung betrifft eine mobile Entladevorrichtung für einen Energiespeicher eines Elektrofahrzeugs sowie Verfahren zum Betreiben der Vorrichtung.

## Beschreibung

Die Erfindung betrifft eine mobile Entladevorrichtung für einen Energiespeicher eines Elektrofahrzeugs sowie Verfahren zum Betreiben der Vorrichtung.

Heutige Elektrofahrzeuge besitzen in der Regel zwei Möglichkeiten, den Hochvolt-Speicher des Fahrzeugs (die Traktionsbatterie) aufzuladen. Dies kann über eine herkömmliche Wechselspannung (AC-Laden, z. B. mit 11kW Ladeleistung) oder über eine Gleichspannung (DC-Laden, z. B. mit 150kW Ladeleistung) erfolgen.

Beide Lademöglichkeiten erfordern eine separate Absicherung, Erprobung und Freigabe. Dies stellt bei BEVs (Battery Electric Vehicles) der neusten Generation mit Reichweiten von 500km eine Herausforderung dar, denn die Ladeerprobung kann nur mit leerer Traktionsbatterie erfolgen. Aktuell gibt es nur die Möglichkeit, nach jedem Vollladeversuch die Fahrzeuge wieder "leer" zu fahren. Das führt bei einer durchschnittlichen Reichweite von 500km zu einem erheblichen Entwicklungsaufwand, längeren Erprobungszeiten und einer Einbuße an Erprobungsdauer bzw. Testzeiten. Es wird zudem ein eingewiesener Fahrer mit Prototypenführerschein benötigt.

Die DE 10 2012 202 465 A1 offenbart ein Stromversorgungssystem mit einer Lade-/Entladeeinrichtung, die an ein Fahrzeug angeschlossen werden und einen elektrischen Energiespeicher des Fahrzeugs laden oder entladen kann.

Aus der DE 10 2008 032 100 A1 sind eine Kondensatoranordnung und eine Stromversorgung für ein Fahrzeug mit einer solchen Kondensatoranordnung bekannt. Die Kondensatoranordnung des Fahrzeugs wird durch Einstecken eines Adapters entladen.

Aus der US 2014/042806 A1 geht ein Sicherheitssystem für Fahrzeuge zur Reduzierung einer Gefahr eines elektrischen Schlags durch eine Batterie hervor. Das Sicherheitssystem umfasst ein Verfahren zum Entladen der Batterie vor einem Recycling-Vorgang.

Vor diesem Hintergrund hat sich die vorliegende Erfindung die Aufgabe gestellt, die Nachteile des Standes der Technik zumindest teilweise zu beseitigen.

Die Aufgabe wird erfindungsgemäß gelöst durch eine Vorrichtung mit den Merkmalen des Anspruchs 1 und ein Verfahren mit den Merkmalen des Anspruchs 8. Ausgestaltungen und Weiterbildungen der Erfindung ergeben sich aus den abhängigen Ansprüchen.

Gegenstand der Erfindung ist eine mobile Entladevorrichtung ("mobile Entladesäule") für einen Energiespeicher eines Elektrofahrzeugs. Der Energiespeicher ist z. B. eine Hochspannungsbatterie (HV-Batterie), die als Traktionsbatterie eingesetzt wird.

Die Entladevorrichtung umfasst mindestens einen ersten CCS-Stecker, der über ein Ladekabel mit der Vorrichtung verbunden und dafür konfiguriert ist, an eine Ladebuchse des Elektrofahrzeugs angeschlossen zu werden, Mittel zur Umwandlung von dem Energiespeicher entnommener elektrischer Energie in Wärme, Mittel zur Umwandlung von dem Energiespeicher entnommener elektrischer Energie in Wechselstrom und/oder Mittel zur Umwandlung von dem Energiespeicher entnommener elektrischer Energie in Gleichstrom, sowie ein Steuergerät, das dafür konfiguriert ist, den Entladevorgang zu steuern.

Die erfindungsgemäße Vorrichtung umfasst mindestens einen CCS-Stecker, der über ein Ladekabel mit der Vorrichtung verbunden und dafür konfiguriert ist, an eine Ladebuchse (fahrzeugseitige Ladedose) des Elektrofahrzeugs angeschlossen zu werden. CCS steht für "Combined Charging System". Die entsprechenden Stecker sind definiert in IEC 62196, Teil 3. In einer Ausführungsform ist der Stecker vom Typ 2. Dieser Typ ist in Europa Standard. In einer anderen Ausführungsform ist der Stecker vom Typ 1. Dieser Typ ist hauptsächlich in den USA verbreitet. Die Entladung des Energiespeichers des Fahrzeuges erfolgt über die Ladedose mit Hilfe der DC-Spannung.

Die Entladevorrichtung kann die entnommene Ladeleistung auf verschiedene Arten verwerten:
- Umwandlung der entnommenen Leistung in Wärme bei geringer Entladeleistung (bis 20kW);
- Rückspeisung der entnommenen Ladeleistung (bis 20kW) ins AC-Netz (Hausnetz);
- Rückspeisung der entnommenen Ladeleistung in ein anderes Elektrofahrzeug (bis 150kW).
Je nach Ausführung der erfindungsgemäßen Entladevorrichtung können auch Kombinationen der Verwertungsarten zum Einsatz kommen.

In einer Ausführungsform umfassen die Mittel zur Umwandlung der dem Energiespeicher entnommenen elektrischen Energie in Wärme mindestens einen elektrischen Widerstand. Der Entladestrom wird durch den mindestens einen elektrischen Widerstand geleitet und dort in Wärme umgewandelt.

In einer weiteren Ausführungsform umfassen die Mittel zur Umwandlung der dem Energiespeicher entnommenen elektrischen Energie in Wechselstrom einen Wechselrichter, dessen Ausgang mit einem dreiphasigen Stecker verbunden ist. Der dreiphasige Stecker kann an ein Wechselstromnetz, beispielsweise ein Hausnetz, angeschlossen werden und der in der Vorrichtung erzeugte Wechselstrom wird in das Netz eingespeist.

In einer weiteren Ausführungsform umfassen die Mittel zur Umwandlung der dem Energiespeicher entnommenen elektrischen Energie in Gleichstrom einen Gleichstromwandler (DC/DC-Wandler), dessen Ausgang mit mindestens einem zweiten CCS-Stecker verbunden ist, der dafür konfiguriert ist, an eine Ladebuchse eines zweiten Elektrofahrzeugs angeschlossen zu werden. Der Energiespeicher des zweiten Elektrofahrzeugs kann dann mit der dem Energiespeicher des ersten Elektrofahrzeugs entnommenen elektrischen Energie geladen werden. Es können auch mehrere Ladekabel mit CCS-Steckern an den Ausgang des DC/DC-Wandlers angeschlossen werden. Es können dann mehrere weitere Elektrofahrzeuge angeschlossen und deren Energiespeicher geladen werden.

Das Steuergerät der erfindungsgemäßen Entladevorrichtung ist dafür konfiguriert, den Entladevorgang zu steuern. In einer Ausführungsform der Entladevorrichtung ist das Steuergerät dafür eingerichtet, via PLC (Power Line Communication) mit dem Elektrofahrzeug bzw. den Elektrofahrzeugen zu kommunizieren. In einer weiteren Ausführungsform ist das Steuergerät dafür eingerichtet, den Entladestrom und die Entladespannung während des Entladevorgangs zu überwachen, und den Entladevorgang so zu steuern, dass ein vorgegebener maximaler Entladestrom nicht überschritten und eine vorgegebene minimale Entladespannung nicht unterschritten wird. In einer weiteren Ausführungsform ist das Steuergerät dafür eingerichtet, sicherzustellen, dass nach dem Entladevorgang eine vorgegebene Restkapazität (SoC) im entladenen Energiespeicher verbleibt. Die vorgegebene Restkapazität kann z. B. 5% der Nennkapazität des Energiespeichers betragen. Wenn also während des Entladevorgangs eine Restladung von 5% des Energiespeichers erreicht wird, bricht das Steuergerät den Entladevorgang ab.

Gegenstand der Erfindung ist auch ein Verfahren zum Entladen eines Energiespeichers eines Elektrofahrzeugs mit der erfindungsgemäßen Entladevorrichtung. Dabei wird der mindestens eine erste CCS-Stecker der Vorrichtung in eine Ladebuchse des Elektrofahrzeugs eingesteckt, und über das Ladekabel elektrische Energie (in Form von Gleichstrom) aus dem Energiespeicher des Elektrofahrzeugs entnommen und in die Vorrichtung geleitet. Das Steuergerät der Vorrichtung steuert in einer Ausführungsform des Verfahrens den Entladestrom und die Entladespannung und bricht den Entladevorgang ab, wenn die Restladung (SoC) des Energiespeichers einen vorgegebenen Schwellenwert erreicht (z. B. 5%). Die dem Energiespeicher entnommene elektrische Energie wird in der Vorrichtung wahlweise in Wärme, Wechselstrom und/oder Gleichstrom umgewandelt. In einer Ausführungsform des Verfahrens wird mit der dem Energiespeicher entnommenen elektrischen Energie der Energiespeicher eines zweiten Elektrofahrzeugs geladen. Dieses Verfahren ermöglicht Energie- und Kosteneinsparungen, da das Fahrzeug, welches entladen wird, den Energiespeicher eines anderen Fahrzeugs laden kann.

Die erfindungsgemäße Vorrichtung und das erfindungsgemäße Verfahren ermöglichen die Verringerung des Entwicklungsaufwands bei der Batterie- und Verfahrensentwicklung, da kein Fahrer notwendig ist, um den Energiespeicher "leerzufahren" und der damit verbundene Zeitverlust entfällt. Sie ermöglichen kürzere Erprobungszeiten, da die Erprobungszeit ausschließlich für Ladetests genutzt werden kann; und es ist eine geringere Anzahl an Erprobungsträgern notwendig.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben. Es zeigt:
Figur 1 eine schematische Darstellung einer Ausführungsform der erfindungsgemäßen Entladevorrichtung;
Figur 2 eine schematische Darstellung einer anderen Ausführungsform der erfindungsgemäßen Entladevorrichtung;
Figur 3 eine schematische Darstellung einer weiteren Ausführungsform der erfindungsgemäßen Entladevorrichtung.

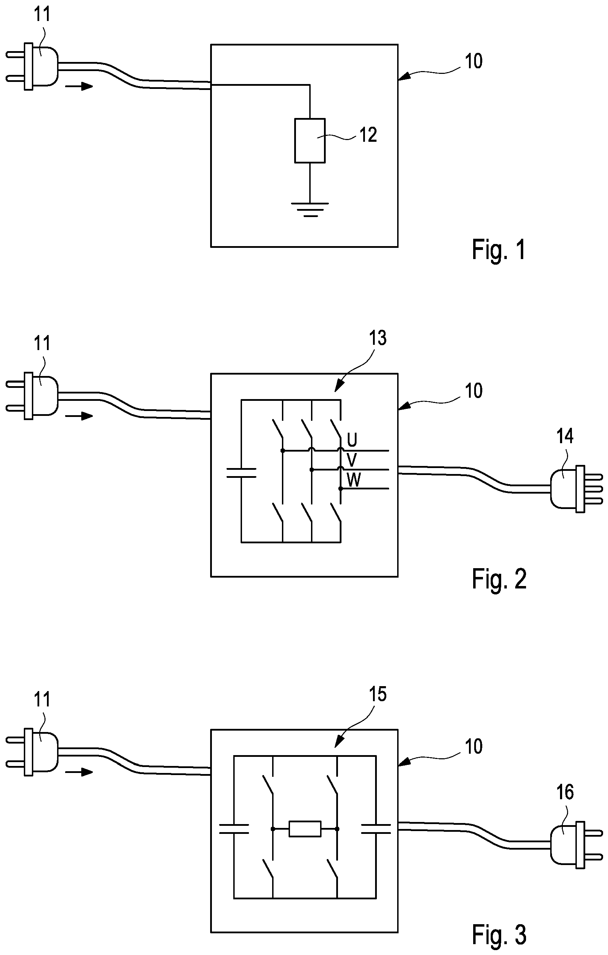

Figur 1 zeigt schematisch eine Ausführungsform der erfindungsgemäßen Entladevorrichtung 10 mit einem daran über ein Ladekabel angeschlossenen CCS-Stecker 11. Ist der CCS-Stecker 11 an die Ladebuchse eines Elektrofahrzeugs angeschlossen, so wird dessen Energiespeicher über einen Widerstand 12 in der Vorrichtung 10 entladen, der die entnommene Leistung in Wärme umwandelt. Typischerweise beträgt die Entladeleistung bei dieser Ausführungsform bis zu 20 kW. Der Pfeil deutet den Leistungsfluss von dem angeschlossenen Elektrofahrzeug an.

Figur 2 zeigt schematisch eine andere Ausführungsform der erfindungsgemäßen Entladevorrichtung 10 mit einem daran über ein Ladekabel angeschlossenen CCS-Stecker 11. Ist der CCS-Stecker 11 an die Ladebuchse eines Elektrofahrzeugs angeschlossen, so wird dessen Energiespeicher über einen Wechselrichter 13 in der Vorrichtung 10 entladen, der die entnommene Leistung in dreiphasigen Wechselstrom umwandelt, der über einen dreiphasigen Stecker 14 abgeführt und beispielsweise in ein Wechselstromnetz (Hausnetz) rückgespeist wird. Typischerweise beträgt die Entladeleistung bei dieser Ausführungsform bis zu 20 kW. Der Pfeil deutet den Leistungsfluss von dem angeschlossenen Elektrofahrzeug an.

Figur 3 zeigt schematisch eine weitere Ausführungsform der erfindungsgemäßen Entladevorrichtung 10 mit einem daran über ein Ladekabel angeschlossenen CCS-Stecker 11. Ist der CCS-Stecker 11 an die Ladebuchse eines Elektrofahrzeugs angeschlossen, so wird dessen Energiespeicher über einen Gleichstromwandler 15 (DC/DC-Wandler) in der Vorrichtung 10 entladen, der die entnommene Leistung über ein zweites Ladekabel mit einem zweiten CCS-Stecker 16 der Ladebuchse eines zweiten Elektrofahrzeugs zuführt, um dessen Energiespeicher zu laden. Typischerweise beträgt die Entladeleistung bei dieser Ausführungsform bis zu 150 kW. Der Pfeil deutet den Leistungsfluss von dem angeschlossenen Elektrofahrzeug an.

### Bezugszeichenliste

- 10: Entladevorrichtung
- 11: CCS-Stecker
- 12: Widerstand
- 13: Wechselrichter
- 14: dreiphasiger Stecker
- 15: DC/DC-Wandler
- 16: CCS-Stecker

## Patentansprüche

1. Mobile Entladevorrichtung (10) für einen Energiespeicher eines Elektrofahrzeugs, umfassend mindestens einen ersten CCS-Stecker (11), der über ein Ladekabel mit der Vorrichtung (10) verbunden und dafür konfiguriert ist, an eine Ladebuchse des Elektrofahrzeugs angeschlossen zu werden; Mittel (12) zur Umwandlung von dem Energiespeicher entnommener elektrischer Energie in Wärme, Mittel (13) zur Umwandlung von dem Energiespeicher entnommener elektrischer Energie in Wechselstrom und/oder Mittel (15) zur Umwandlung von dem Energiespeicher entnommener elektrischer Energie in Gleichstrom; sowie ein Steuergerät, das dafür konfiguriert ist, den Entladevorgang zu steuern.

2. Mobile Entladevorrichtung (10) nach Anspruch 1, bei dem die Mittel (12) zur Umwandlung der dem Energiespeicher entnommenen elektrischen Energie in Wärme mindestens einen elektrischen Widerstand umfassen.

3. Mobile Entladevorrichtung (10) nach Anspruch 1 oder 2, bei dem die Mittel (13) zur Umwandlung der dem Energiespeicher entnommenen elektrischen Energie in Wechselstrom einen Wechselrichter umfassen, dessen Ausgang mit einem dreiphasigen Stecker (14) verbunden ist.

4. Mobile Entladevorrichtung (10) nach einem der Ansprüche 1 bis 3, bei dem die Mittel (15) zur Umwandlung der dem Energiespeicher entnommenen elektrischen Energie in Gleichstrom einen Gleichstromwandler (15) umfassen, dessen Ausgang mit mindestens einem zweiten CCS-Stecker (16) verbunden ist, der dafür konfiguriert ist, an eine Ladebuchse eines zweiten Elektrofahrzeugs angeschlossen zu werden.

5. Mobile Entladevorrichtung (10) nach einem der voranstehenden Ansprüche, bei der das Steuergerät dafür eingerichtet ist, via PLC (Power Line Communication) mit dem Elektrofahrzeug bzw. den Elektrofahrzeugen zu kommunizieren.

6. Mobile Entladevorrichtung (10) nach einem der voranstehenden Ansprüche, bei der das Steuergerät dafür eingerichtet ist, den Entladevorgang so zu steuern, dass ein vorgegebener maximaler Entladestrom nicht überschritten und eine vorgegebene minimale Entladespannung nicht unterschritten wird.

7. Mobile Entladevorrichtung (10) nach einem der voranstehenden Ansprüche, bei der das Steuergerät dafür eingerichtet ist, sicherzustellen, dass nach dem Entladevorgang eine vorgegebene Restkapazität (SoC) im entladenen Energiespeicher verbleibt.

8. Verfahren zum Entladen eines Energiespeichers eines Elektrofahrzeugs mit einer Vorrichtung (10) nach einem der voranstehenden Ansprüche, worin der mindestens eine erste CCS-Stecker (11) in eine Ladebuchse des Elektrofahrzeugs eingesteckt wird, und über das Ladekabel elektrische Energie aus dem Energiespeicher des Elektrofahrzeugs entnommen und in die Vorrichtung geleitet wird.

9. Verfahren nach Anspruch 8, worin das Steuergerät der Vorrichtung (10) den Entladestrom und die Entladespannung steuert und den Entladevorgang abbricht, wenn die Restladung des Energiespeichers einen vorgegebenen Schwellenwert erreicht.

10. Verfahren nach Anspruch 8 oder 9, worin mit der dem Energiespeicher entnommenen elektrischen Energie der Energiespeicher eines zweiten Elektrofahrzeugs geladen wird.
